(19) Europäisches Patentamt
European Patent Office
Office européen des brevets

(11) **EP 0 557 875 B1**

(12) **EUROPÄISCHE PATENTSCHRIFT**

(45) Veröffentlichungstag und Bekanntmachung des Hinweises auf die Patenterteilung:
**18.10.2000 Patentblatt 2000/42**

(51) Int. Cl.[7]: **B32B 27/32**, B65D 65/40

(21) Anmeldenummer: **93102447.5**

(22) Anmeldetag: **17.02.1993**

(54) **Einseitig niedrig siegelnde, transparente Polyolefin-Mehrschichtfolie, Verfahren zu ihrer Herstellung und ihre Verwendung**

One-sided low temperature heat sealable, transparent polyolefin multilayered film, process for its manufacture and its use

Film multicouche polyoléfinique transparent scellable d'un côté à temperature basse, procédé pour sa fabrication et sa application

(84) Benannte Vertragsstaaten:
**BE DE ES FR GB IT NL**

(30) Priorität: **24.02.1992 DE 4205555**

(43) Veröffentlichungstag der Anmeldung:
**01.09.1993 Patentblatt 1993/35**

(73) Patentinhaber: **Trespaphan GmbH**
**66539 Neunkirchen (DE)**

(72) Erfinder:
• **Murschall, Ursula, Dr.**
**W-6505 Nierstein (DE)**
• **Speith, Angela**
**W-6500 Mainz (DE)**
• **Schlögl, Günter, Dr.**
**W-6233 Kelkheim (DE)**

(74) Vertreter:
**Luderschmidt, Schüler & Partner GbR**
**Patentanwälte,**
**Postfach 3929**
**65029 Wiesbaden (DE)**

(56) Entgegenhaltungen:
**EP-A- 0 273 680**      **EP-A- 0 340 579**
**EP-A- 0 463 517**      **EP-A- 0 482 501**
**DE-A- 3 940 197**      **GB-A- 2 055 688**
**US-A- 4 230 767**      **US-A- 4 419 411**

**Beschreibung**

Die Erfindung betrifft eine beidseitig siegelnde, transparente, bedruckbare, biaxial orientierte Polyolefin-Mehrschichtfolie aus einer Basisschicht B und beidseitig darauf angeordneten verschiedenen Deckschichten A und C entsprechend einem Schichtaufbau ABC. Beide Deckschichten sind siegelbar, wobei eine der beiden Deckschichten eine besonders niedrige Siegelanspringtemperatur aufweist. Die Basisschicht enthält im wesentlichen ein peroxidisch abgebautes Polypropylenpolymeres und gegebenenfalls zugesetzte Additive. Die niedrig siegelnde Deckschicht A enthält im wesentlichen eine Polymermischung aus Propylencopolymeren und/oder Propylenterpolymeren und zugesetzte Additive. Die Deckschicht C enthält im wesentlichen Polypropylencopolymere oder Polypropylenterpolymere und mindestens ein, gegebenenfalls auch mehrere zugesetzte/s Additiv/e. In einer bevorzugten Ausführungsform wird auch das Propylenpolymer der Deckschicht C peroxidisch abgebaut. Diese Deckschicht C ist im üblichen Temperaturbereich siegelbar und zusätzlich bedruckbar.

Aus der DE-A-16 94 694 sind heißsiegelbare Schichtstoffe aus einer orientierten Polypropylenfolie bekannt, die aus mindestens einer heißsiegelfähigen Schicht bestehen, die Ethylen-Propylen-Copolymere aus 2 bis 6 Gew.-% Ethylen und 98 bis 94 Gew.-% Propylen enthält. Diese Folien besitzen zwar eine gute Heißsiegelbarkeit, jedoch sind sie nicht im erwünschten Maße klar und kratzfest und zeigen zudem ungenügende Verarbeitungseigenschaften auf schnellaufenden Verpackungsmaschinen.

Aus der EP-B-0 027 586 sind siegelbare Polypropylenfolien bekannt, die eine Siegelschicht aus einem Ethylen-Homo- oder -Copolymerisat besitzen, die mit einem langkettigen aliphatischen Amin, einer unverträglichen thermoplastischen Komponente und einem Polydialkylsiloxan ausgerüstet sind. Diese Folien stellen zwar eine Verbesserung im Vergleich zur DE-A-16 94 694 dar, besitzen aber noch eine unzureichende Laufsicherheit auf horizontalen Form-Füll-Schließmaschinen.

Aus der DE-A-29 41 140 ist ein Verpackungsmaterial bekannt, welches aus einer Basisschicht aus einem Polypropylenpolymerisat und aus einer Deckschicht besteht, die aus einem Gemisch eines Propylen-Ethylen-Copolymerisats und eines $C_4$-$C_{10}$-$\alpha$-Olefin-Propylen-Copolymerisats besteht. Diese Deckschicht kann auch ein niedrigmolekulares thermoplastisches Harz sowie Silikonöle enthalten. Derartige Verpackungsmaterialien weisen den Nachteil auf, daß sie kratzempfindlich sind und noch unbefriedigende optische Eigenschaften besitzen.

EP0482501 betrifft eine beidseitig siegelbare, schrumpffähige, biaxial orientierte, transparente, coextrudierte Polyolefin-Mehrschichtfolie, deren Basisschicht im wesentlichen aus einem peroxidisch abgebautem Polypropylenhomopolymeren und deren Deckschichten im wesentlichen aus siegelbaren Olefinpolymeren bestehen. Die Mehrschichtfolie zeichnet sich durch einen hohen Schrumpf in Längs- und Querrichtung in Kombination mit exzellenten optischen Eigenschaften und einer guten Maschinengängigkeit auf schnell laufenden Einschlagmaschinen aus. Weiterhin betrifft die Erfindung ein Verfahren zur Herstellung einer solchen Folie und deren Verwendung.

EP0463517 bezieht sich auf eine mehrschichtige, coextrudierte Polyolefinfolie umfassend eine Basisschicht aus Propylenpolymeren und wenigstens eine Deckschicht aus einem peroxidisch abgebautem Propylen-Ethylen-Copolymerisat mit einem Ethylengehalt im Bereich von 1,5 bis 7,0 Gew.-% besitzt, bezogen auf das Gesamtgewicht des Copolymerisates, wobei sein Abbaufaktor A im Bereich von 3 bis 15 liegt. Die Erfindung betrifft auch die Verwendung einer solchen Folie.

EP0273680 schlägt den peroxidischen Abbau für ein C2/C3-Copolymer der Deckschicht vor. Eine Deckschicht enthält ein Polydialkylsiloxan, die andere nicht. Es tritt eine 'Übertragung' von Polydialkylsiloxan im aufgerollten Zustand der Folie auf.

Aus der EP-A-0 114 312 ist eine transparente polyolefinische Mehrschichtfolie bekannt, welche aus einer Basisschicht aus einem Propylenpolymeren und mindestens einer siegelbaren Schicht besteht. Die siegelbare Schicht besteht aus einer Olefinharzzusammensetzung aus einem Ethylen-Propylen-Butylen-Polymeren und einem Propylen-Butylen-Polymeren und enthält 5 bis 15 Gew.-% eines verträglichen Kohlenwasserstoff-Harzes, 5 bis 15 Gew.-% Propylenhomopolymerisat und 0,3 bis 1,5 Gew.-% Polydiorganosiloxan. Nach der Beschreibung besitzt die Folie eine niedrige Siegelanspringtemperatur und gute Laufsicherheit auf schnellaufenden Verpackungsmaschinen. Die Folie ist aber nicht bedruckbar. Aufgrund des Harzzusatzes treten außerdem bei der Folienherstellung Harzablagerungen an den Längsstreckwalzen auf, die sich negativ auf die Folienoptik auswirken (Streifenbildung). Beim Nacharbeiten von Beispiel 1 der EP-A-0 114 312 zeigte sich weiter, daß die Folie noch immer Defizite im Reibungsverhalten und eine schlechte Folienoptik (hohe Trübung, niedriger Glanz) aufweist. Außerdem treten Fließstörungen über die Folienbreite auf, die zu extremen Aussortierungen führen.

Aus der EP-A-0 184 094 sind siegelfähige, transparente, polyolefinische Mehrschichtfolien bekannt, die aus einer Basisschicht aus einem Propylenpolymeren, einer siegelfähigen Oberflächenschicht, die aus einem Copolymeren aus Propylen-und Ethylen- oder Buten-1-Einheiten und/oder einem Terpolymeren aus Ethylen-, Propylen- und Buten-1-Einheiten besteht, und einer zweiten Deckschicht aus Propylenpolymeren bestehen. Die nicht siegelfähige zweite Deckschicht ist mit Polydimethylsiloxan und mit einem blättchenförmigen Antiblockmittel ausgerüstet.

Beim Nacharbeiten von EP-A-0 184 094 zeigte sich, daß die Folie eine schlechte Folienoptik und Trübstreifen infolge von Fließstörungen aufweist. Außerdem traten an den Längsstreckwalzen massive Harzablagerungen auf. Nach 4wöchiger Lagerung ließ sich die Folie nur noch unzureichend, nach 2 Monaten gar nicht mehr bedrucken (Oberflächenspannung < 35 mN/m).

Ferner beschreibt die Firma Mitsui Petrochemical Industries, Ltd. in ihrem Prospekt TAFMER XR, Japan 82 03 1000 CI ein α-Olefin-Copolymeres, welches als Siegelschicht für Polypropylenfolien geeignet ist. Wie Vergleichsbeispiel 8 (Tabelle 1) zeigt, sind aber Polypropylenfolien mit Siegelschichten nur aus diesem Produkt in mancherlei Hinsicht noch nicht befriedigend.

Dem allgemeinen Stand der Technik ist zu entnehmen, daß für die unterschiedlichen Anwendungen der Polypropylenfolien unterschiedliche Eigenschaften und insbesondere spezielle Kombinationen der einzelnen Qualitätsmerkmale gefordert sind.

Die Aufgabe der vorliegenden Erfindung bestand darin, die Nachteile der im Stand der Technik vorbeschriebenen Folien zu vermeiden.

Insbesondere soll eine Polyolefin-Mehrschichtfolie zur Verfügung gestellt werden, die beidseitig siegelbar ist, wobei eine Seite eine möglichst niedrige Siegelanspringtemperatur aufweisen soll. Dabei werden gleichzeitig eine gute Bedruckbarkeit und gute optische Eigenschaften der Folie gefordert, d. h. insbesondere ein hoher Oberflächenglanz bei minimaler Trübung und homogener Folienoptik. Je nach ihrem Verwendungszweck soll die Folie zusätzlich eine geringe Kratzempfindlichkeit und/oder eine geringe Reibung und damit gute Laufeigenschaften auf schnelllaufenden Verpackungsmaschinen verschiedenen Typs besitzen. Außerdem soll sich die Folie nach konventionellen Verfahren, bei denen biaxial mit Hilfe von Walzen und Kluppenrahmen gestreckt wird, problemlos herstellen lassen.

Gelöst wird diese Aufgabe durch eine Polyolefin-Mehrschichtfolie der eingangs genannten Gattung, wobei

a) die Basisschicht B ein peroxidisch abgebautes Polypropylenpolymeres und gegebenenfalls zugesetzte Additive enthält und der Abbaufaktor für das peroxidisch abgebaute Polypropylenpolymere im Bereich von 3 bis 10 liegt und

b) die Deckschicht A eine Polymermischung aus zwei oder mehreren der im folgenden genannten Co- und/oder Terpolymeren:

ein Copolymeres von

Ethylen und Propylen oder
Ethylen und Butylen oder
Propylen und Butylen oder
Ethylen und einem anderen α-Olefin mit 5 bis 10 Kohlenstoffatomen oder
Propylen und einem anderen α-Olefin mit 5 bis 10 Kohlenstoffatomen oder

ein Terpolymeres von

Ethylen und Propylen und Butylen oder
Ethylen und Propylen und einem anderen α-Olefin mit 5 bis

10 Kohlenstoffatomen und

ein hochviskoses Polydiorganosiloxan und Siliciumdioxid und gegebenenfalls weitere zugesetzte Additive enthält und

c) die Deckschicht C

ein Copolymeres von

Ethylen und Propylen oder
Ethylen und Butylen oder
Propylen und Butylen oder
Ethylen und einem anderen α-Olefin mit 5 bis 10 Kohlenstoffatomen oder
Propylen und einem anderen α-Olefin mit 5 bis 10 Kohlenstoffatomen oder

ein Terpolymeres von

Ethylen und Propylen und Butylen oder

Ethylen und Propylen und einem anderen $\alpha$-Olefin mit 5 bis
10 Kohlenstoffatomen und

gegebenenfalls zugesetzte Additive in jeweils wirksamen Mengen enthält
und auf ihrer äußeren Oberfläche eine nicht zusammenhängende Belegung mit Polydialkylsiloxan aufweist.

Die Basisschicht besteht im wesentlichen aus einem peroxidisch abgebauten Propylenpolymeren, das zum überwiegenden Teil (mindestens 90 %) aus Propylen besteht und einen Schmelzpunkt im Bereich von 160 bis 170 °C, vorzugsweise 162 bis 168 °C, besitzt. Isotaktisches Polypropylen mit einem n-heptanlöslichen Anteil von 6 Gew.-% und weniger, bezogen auf das isotaktische Polypropylen, Copolymere von Ethylen und Propylen mit einem Ethylengehalt von 10 Gew.-% oder weniger, Copolymere von Propylen mit $C_4$-$C_8$-$\alpha$-Olefinen mit einem $\alpha$-Olefingehalt von 10 Gew.-% oder weniger stellen bevorzugte Propylenpolymere dar. Der Schmelzflußindex des Polypropylenpolymeren liegt vor dem peroxidischen Abbau bei kleiner 1,5 g/10 min, vorzugsweise im Bereich von 0,2 bis 0,9 g/10 min (Messung DIN 53 735, 21,6 N Belastung und 230 °C).

Um die geforderte gute Folienoptik zu erreichen, wird das Polypropylenpolymere erfindungsgemäß durch Zusatz von organischen Peroxiden teilabgebaut. Dabei erhöht sich der Schmelzflußindex des so behandelten Polypropylenpolymeren auf einen Bereich von 2 bis 5,5 g/10 min. Ein Maß für den Grad des Abbaus des Polymeren ist der sogenannte Abbaufaktor A, welcher die relative Änderung des Schmelzflußindex nach DIN 53 735 des Polypropylens, bezogen auf das Ausgangspolymere angibt.

$$A = \frac{MFI_2}{MFI_1}$$

MFI$_1$ =    Schmelzflußindex vor dem Zusatz des organischen Peroxids Polypropylenpolymerer
MFI$_2$ =    Schmelzflußindex des peroxidisch abgebauten Polypropylenpolymeren

Erfindungsgemäß liegt der Abbaufaktor A des eingesetzten Polypropylenpolymeren in einem Bereich von 3 bis 10, vorzugsweise 4 bis 8. Die Einhaltung dieses Bereichs ist für die gewünschten Eigenschaften der Folie wesentlich. Liegt der Abbaufaktor des Polypropylenhomopolymerisates unter 3, verschlechtern sich die optischen Eigenschaften (deutliche Erhöhung der Folientrübung, Erniedrigung des Oberflächenglanzes). Liegt der Abbaufaktor über 10, treten Probleme bei der Herstellung auf, beispielsweise läßt sich die Folie dann nur noch in einem sehr engen Temperaturbereich oder gar nicht mehr verstrecken.

Als organische Peroxide sind Dialkylperoxide besonders bevorzugt, wobei unter einem Alkylrest die üblichen gesättigten geradkettigen oder verzweigten niederen Alkylreste mit bis zu sechs Kohlenstoffatomen verstanden werden. Insbesondere sind 2,5-Dimethyl-2,5-di(t-butylperoxy)-hexan oder Di-t-butylperoxid bevorzugt.

Gegebenenfalls kann die Basisschicht aus dem peroxidisch abgebauten Propylenpolymeren noch Additive wie z. B. Antistatika und/oder Gleitmittel und/oder Stabilisatoren und/oder Neutralisationsmittel in jeweils wirksamen Mengen enthalten.

Die auf der Oberfläche der Basisschicht angeordnete niedrig siegelnde Deckschicht A enthält im wesentlichen eine Polymermischung von Propylencopolymeren und/oder Propylenterpolymeren und zugesetzten Additiven in jeweils wirksamen Mengen wobei die besagte Polymermischung aus zwei oder mehreren der im folgenden genannten Co- und/oder Terpolymeren besteht:

Ein Copolymeres von

Ethylen und Propylen oder
Ethylen und Butylen oder
Propylen und Butylen oder
Ethylen und einem anderen $\alpha$-Olefin mit 5 bis 10 Kohlenstoffatomen oder
Propylen und einem anderen $\alpha$-Olefin mit 5 bis 10 Kohlenstoffatomen oder

ein Terpolymeres von

Ethylen und Propylen und Butylen oder
Ethylen und Propylen und einem anderen $\alpha$-Olefin mit 5 bis 10 Kohlenstoffatomen.

Besonders bevorzugt sind Polymermischungen aus zwei oder mehreren der folgenden Co- und/oder Terpolymeren:

Ein Copolymeres von

Ethylen und Propylen oder
Ethylen und Butylen-1 oder
Propylen und Butylen-1 oder

ein Terpolymeres von

Ethylen und Propylen und Butylen-1,

wobei insbesondere
statistische Ethylen-Propylen-Copolymere mit

einem Ethylengehalt von 2 bis 10 Gew.-%, bevorzugt 3 bis 6 Gew.-%, oder

statistische Propylen-Butylen-1-Copolymere mit

einem Butylengehalt von 4 bis 25 Gew.-%, bevorzugt 10 bis 20 Gew.-%,
jeweils bezogen auf das Gesamtgewicht des Copolymeren, oder statistische Ethylen-Propylen-Butylen-1-Terpolymere mit
einem Ethylengehalt von 1 bis 10 Gew.-%, bevorzugt 2 bis 6 Gew.-%, und
einem Butylen-1-Gehalt von 3 bis 20 Gew.-%, bevorzugt 8 bis 10 Gew.-%,
jeweils bezogen auf das Gesamtgewicht des Terpolymeren,

besonders bevorzugt sind.

Insbesondere ist eine

Mischung von einem Ethylen-Propylen-Butylen-1-Terpolymeren und einem Propylen-Butylen-1-Copolymeren

mit einem Ethylengehalt von 0,1 bis 7 Gew.-%
und einem Propylengehalt von 50 bis 90 Gew.-%
und einem Butylen-1-Gehalt von 10 bis 40 Gew.-%,
bezogen auf das Gesamtgewicht der Polymermischung,

ganz besonders vorteilhaft.

Die Polymermischung der Deckschicht A hat einen Schmelzflußindex (DIN 53 735 bei 230 °C und 21,6 N Belastung) von 1 bis 16 g/10 min, vorzugsweise von 4 bis 10 g/10 min, wobei der Schmelzflußindex der Deckschicht A höher liegt als jener des Propylenpolymeren der Basisschicht.

Der Schmelzbereich der Polymermischung der Deckschicht A liegt bei 120 °C oder höher, vorzugsweise zwischen 125 und 142 °C.

Die Polymermischung hat einen p-Xylollöslichen Anteil von 25 bis 70 Gew.-%, bevorzugt von 40 bis 60 Gew.-%, ermittelt bei 20 °C.

Als Additiv enthält die Deckschicht A ein hochviskoses Polydiorganosiloxan mit einer Viskosität von größer 50 000 mm$^2$/s, bevorzugt 100 000 bis 1 000 000 mm$^2$/s, bei jeweils 25 °C, welches in einer Menge von 1,0 bis 4,0 Gew.-%, vorzugsweise 1,5 bis 3,0 Gew.-%, bezogen auf die Deckschicht A, zugesetzt wird.

Als Beispiele für geeignete Polydiorganosiloxane sind Polydialkylsiloxane, olefinmodifizierte Siloxanöle, polyethermodifizierte Siliconöle, olefin/polyethermodifizierte Siliconöle, epoxymodifizierte Siliconöle und alkoholmodifizierte Siliconöle. Polydialkylsiloxane mit vorzugsweise 1 bis 6 Kohlenstoffatomen in der Alkylgruppe, insbesondere Polydimethylsiloxane, hervorzuheben.

Zusätzlich ist in der Deckschicht A Siliciumdioxid mit einem mittleren Teilchendurchmesser von 2 bis 6 µm, vorzugsweise von etwa 4 µm, als Antiblockmittel enthalten, wobei 0,1 bis 1,0 Gew.-%, insbesondere 0,2 bis 0,5 Gew.-%, SiO$_2$ bevorzugt sind. Gegebenenfalls kann die Deckschicht weitere Additive enthalten, die die Eigenschaften der Folie vorteilhaft verbessern.

Die Deckschicht C der Mehrschichtfolie besteht im wesentlichen aus

einem Copolymeren von

Ethylen und Propylen oder
Ethylen und Butylen oder
Propylen und Butylen oder
Ethylen und einem anderen α-Olefin mit 5 bis 10 Kohlenstoffatomen oder
Propylen und einem anderen α-Olefin mit 5 bis 10 Kohlenstoffatomen oder aus

einem Terpolymeren von

Ethylen und Propylen und Butylen oder
Ethylen und Propylen und einem anderen α-Olefin mit 5 bis 10 Kohlenstoffatomen

und mindestens einem, gegebenenfalls mehreren zugesetzten Additiv/en in jeweils wirksamen Mengen.

Besonders bevorzugt sind

Copolymere von

Ethylen und Propylen oder
Ethylen und Butylen-1 oder
Propylen und Butylen-1 oder

Terpolymere von

Ethylen und Propylen und Butylen-1

enthalten, wobei insbesondere

statistische Ethylen-Propylen-Copolymere mit

einem Ethylengehalt von 2 bis 8 Gew.-%, bevorzugt 3 bis 6 Gew.-%, oder

statistische Propylen-Butylen-1-Copolymere mit

einem Butylengehalt von 4 bis 25 Gew.-%, bevorzugt 10 bis 20 Gew.-%,

jeweils bezogen auf das Gesamtgewicht des Copolymeren, oder statistische Ethylen-Propylen-Butylen-1-Terpolymere mit

einem Ethylengehalt von 1 bis 10 Gew.-%, bevorzugt 2 bis 6 Gew.-%, und
einem Butylen-1-Gehalt von 3 bis 15 Gew.-%, bevorzugt 8 bis 10 Gew.-%,
bezogen auf das Gesamtgewicht des Terpolymeren,

bevorzugt sind.

Der Schmelzflußindex des Co- oder Terpolymeren der Deckschicht C ist kleiner 3,0 g/10 min und liegt vorzugsweise im Bereich von 0,5 g/10 min bis 2,0 g/10 min (DIN 53 735). Der Schmelzpunkt liegt im Bereich von 120 bis 140 °C.
In einer bevorzugten Ausführungsform wird das Co- oder Terpolymere der Deckschicht C durch Zusatz organischer Peroxide teilabgebaut, analog dem vorgehend beschriebenen peroxidischen Abbau des Propylenpolymeren der Basisschicht.
Der Abbaufaktor A liegt in einem Bereich von 3 bis 15, bevorzugt 6 bis 10. Dies entspricht einer Erhöhung des Schmelzflußindex des Polymeren auf einen Bereich von 5,5 bis 15 g/10 min. Dabei ist es besonders vorteilhaft, wenn der erreichte Schmelzflußindex des Co- oder Terpolymeren größer als der des Polypropylens der Basisschicht ist.
Weiterhin ist es bevorzugt, an der Oberfläche der Deckschicht C nach der an sich bekannten Technik eine Coronabehandlung vorzunehmen, wobei die Behandlungsintensitäten im üblichen Rahmen liegen, vorzugsweise im Bereich von 36 bis 42 mN/m. Die Schicht weist dann direkt nach der Herstellung eine Oberflächenspannung von 36 bis 42 mN/m auf, die auch nach einer mehrmonatigen Lagerzeit nicht wesentlich abfällt.

Als Additiv enthält die Deckschicht mindestens 0,1 bis 1,0 Gew.-%, vorzugsweise 0,2 bis 0,5 Gew.-%, eines Antiblockmittels, bevorzugt Siliciumdioxid mit einem mittleren Teilchendurchmesser von 2 bis 6 $\mu$m. Gegebenenfalls können weitere Additive enthalten sein.

Zusätzlich ist die Oberfläche der Deckschicht C mit einer nicht zusammenhängenden Schicht eines Polydialkylsiloxans belegt, welches aber nicht in der Deckschicht inkorporiert ist. Unter einer nicht zusammenhängenden Schicht wird hierbei eine gleichmäßige Verteilung von Polydialkylsiloxan auf der Oberfläche verstanden, so daß diese nicht vollständig von Siloxan bedeckt ist. Diese Belegung der Oberfläche der Deckschicht wird mit Hilfe der ESCA-Spektroskopie gemessen und wird als dimensionslose relative Belegung angegeben, die sich aus dem Verhältnis der gemessenen Siliciumintensität zur Kohlenstoffintensität ergibt. Die relative Belegung der Deckschicht C ist erfindungsgemäß kleiner als 20 und liegt vorzugsweise im Bereich von 2 bis 12.

Eine solche Belegung der Oberfläche wird durch einen intensiven Kontakt, z. B. durch Aufeinanderlegen, beider Deckschichten A und C erreicht, wobei die in der Deckschicht A inkorporierten Polydialkylsiloxan-Teilchen auf die Oberfläche der Deckschicht C übertragen, aber nicht inkorporiert werden. Dabei wird eine in Bezug auf den Siloxangehalt der Schicht A so geringe Menge übertragen, daß sich die Siloxankonzentration der Schicht A nicht meßbar ändert, aber eine teilweise, jedoch nicht vollständige Belegung der Oberfläche von Schicht C erreicht wird.

Diese oben beschriebene Übertragung von Polydialkylsiloxan erfolgt nach der Coronabehandlung der Deckschicht C, wobei diese Reihenfolge, d. h. zuerst Coronabehandlung, dann Belegung der Oberfläche, erfindungswesentlich für die Kombination der gewünschten Folieneigenschaften ist. Überraschenderweise erzielt man hierdurch eine sehr gute Bedruckbarkeit, wobei gleichzeitig die guten Siegeleigenschaften erhalten bleiben und andere nachteilige Wirkung auf weitere wichtige Eigenschaften vermieden werden.

Die Dicke der einzelnen Deckschichten der erfindungsgemäßen Polyolefin-Mehrschichtfolie ist größer als 0,4 $\mu$m und liegt im allgemeinen im Bereich von 0,6 bis 3 $\mu$m und vorzugsweise im Bereich von 0,6 bis 1 $\mu$m, wobei die Deckschichten gleich oder verschieden dick sein können.

Die Gesamtdicke kann innerhalb weiter Grenzen variieren und richtet sich nach dem beabsichtigten Einsatz. Sie beträgt im allgemeinen 10 bis 60 $\mu$m, vorzugsweise 20 bis 40 $\mu$m, wobei die Basisschicht etwa 50 bis 90 % der Gesamtfoliendicke ausmacht.

Um bestimmte Eigenschaften der erfindungsgemäßen Folie noch zu verbessern, können sowohl die Basisschicht als auch die Deckschichten weitere Zusätze in einer jeweils wirksamen Menge enthalten, vorzugsweise Antistatika und/oder Antiblockmittel und/oder Gleitmittel und/oder Stabilisatoren und/oder Neutralisationsmittel und/oder niedrigmolekulare Kohlenwasserstoffharze, die mit den Polymeren der Basisschicht und der Deckschicht/en verträglich sind. Alle Mengenangaben in der folgenden Ausführung in Gewichtsprozent (Gew.-%) beziehen sich jeweils auf die Schicht oder Schichten, der oder denen das Additiv zugesetzt sein kann.

Bevorzugte Antistatika sind Alkali-alkansulfonate, polyethermodifizierte, d. h. ethoxylierte und/oder propoxylierte Polydiorganosiloxane (Polyalkylphenylsiloxane und dergleichen) und/oder die im wesentlichen geradkettigen und gesättigten aliphatischen, tertiären Amine mit einem aliphatischen Rest mit 10 bis 20 Kohlenstoffatomen, die mit $\omega$-Hydroxy-($C_1$-$C_4$)-alkyl-Gruppen substituiert sind, wobei N,N-bis-(2-hydroxyethyl)-alkylamine mit 10 bis 20 Kohlenstoffatomen, vorzugsweise 12 bis 18 Kohlenstoffatomen, im Alkylrest besonders geeignet sind. Die wirksame Menge an Antistatikum liegt im Bereich von 0,05 bis 3 Gew.-%.

Gleitmittel sind höhere aliphatische Säureamide, höhere aliphatische Säureester, Wachse und Metallseifen. Die wirksame Menge an Gleitmittel liegt im Bereich von 0,1 bis 3 Gew.-%. Besonders geeignet ist der Zusatz von höheren aliphatischen Säureamiden im Bereich von 0,15 bis 0,25 Gew.-% in der Basisschicht und/oder den Deckschichten. Ein insbesondere geeignetes aliphatisches Säureamid ist Erucasäureamid.

Als Stabilisatoren können die üblichen stabilisierend wirkenden Verbindungen für Ethylen-, Propylen- und andere $\alpha$-Olefinpolymere eingesetzt werden. Deren Zusatzmenge liegt zwischen 0,05 und 2 Gew.-%. Besonders geeignet sind phenolische Stabilisatoren, Alkali-/Erdalkalistearate und/oder Alkali-/Erdalkalicarbonate. Phenolische Stabilisatoren werden in einer Menge von 0,1 bis 0,6 Gew.-%, insbesondere 0,15 bis 0,3 Gew.-%, und mit einer Molmasse von mehr als 500 g/mol bevorzugt. Pentaerythrityl-Tetrakis-3-(3,5-di-Tertiärbutyl-4-Hydroxyphenyl)-Propionat oder 1,3,5-Trimethyl-2,4,6-tris(3,5-di-Tertiärbutyl-4-Hydroxybenzyl)benzol sind besonders vorteilhaft.

Neutralisationsmittel sind vorzugsweise Calciumstearat und/oder Calciumcarbonat einer mittleren Teilchengröße von höchstens 0,07 mm, einer absoluten Teilchengröße von kleiner 5 $\mu$m und einer spezifischen Oberfläche von mindestens 40 $m^2$/g.

Weiterhin sind Erdalkalistearate und -carbonate in einer Zusatzmenge von 0,01 bis 0,05 Gew.-% bevorzugt, insbesondere Calciumstearat und/oder Calciumcarbonat mit einer mittleren Teilchengröße kleiner 0,1 $\mu$m, vorzugsweise 0,03 bis 0,07 $\mu$m, mit einer absoluten Teilchengröße von kleiner 5 $\mu$m und einer spezifischen Oberfläche von mindestens 40 $m^2$/g.

Geeignete Antiblockmittel sind anorganische Zusatzstoffe wie Siliciumdioxid, Calciumcarbonat, Magnesiumsilicat, Aluminiumsilicat, Calciumphosphat und dergleichen und/oder unverträgliche organische Polymerisate wie Polyamide, Polyester, Polycarbonate und dergleichen, bevorzugt werden Benzoguanaminformaldehyd-Polymere, Siliciumdioxid und Calciumcarbonat. Die wirksame Menge an Antiblockmittel liegt im Bereich von 0,1 bis 2 Gew.-%, vorzugsweise 0,1 bis 0,5 Gew.-%. Die mittlere Teilchengröße liegt zwischen 1 und 6 µm, insbesondere 2 und 5 µm, wobei Teilchen mit einer kugelförmigen Gestalt, wie in der EP-A-0 236 945 und der DE-A-38 01 535 beschrieben, besonders geeignet sind. Bevorzugt werden die Antiblockmittel den Deckschichten zugesetzt.

Bei dem empfohlenen niedrigmolekularen Harz handelt es sich um ein natürliches oder synthetisches Harz mit einem Erweichungspunkt von 60 bis 180 °C, vorzugsweise 80 bis 150 °C, bestimmt nach ASTM E-28. Unter den zahlreichen niedrigmolekularen Harzen sind die Kohlenwasserstoffharze bevorzugt, und zwar in Form der Erdölharze (Petroleumharze), Styrolharze, Cyclopentadienharze und Terpenharze (diese Harze sind in Ullmanns Encyklopädie der technischen Chemie, 4. Auflage, Band 12, Seiten 525 bis 555, beschrieben). Die wirksame Menge an niedrigmolekularem Harz beträgt 3 bis 15 Gew.-%, vorzugsweise 5 bis 10 Gew.-%, bezogen auf die Schicht.

Die Erfindung betrifft weiterhin ein Verfahren zur Herstellung der erfindungsgemäßen Mehrschichtfolie nach dem an sich bekannten Coextrusionsverfahren. Im Rahmen dieses Verfahrens wird so vorgegangen, daß die den einzelnen Schichten der Folie entsprechenden Schmelzen durch eine Flachdüse coextrudiert werden, die so erhaltene Folie zur Verfestigung auf einer oder mehreren Walze/n abgezogen wird, die Folie anschließend biaxial gestreckt (orientiert), die biaxial gestreckte Folie thermofixiert und gegebenenfalls an der zur Coronabehandlung vorgesehenen Oberflächenschicht C coronabehandelt wird. Abschliessend erfolgt im Anschluß an die Corona- oder Flammbehandlung die Belegung der Oberflächenschicht C mit Polydialkylsiloxan.

Die biaxiale Streckung (Orientierung) kann simultan oder aufeinanderfolgend durchgeführt werden, wobei die aufeinanderfolgende biaxiale Streckung, bei der zuerst längs (in Maschinenrichtung) und dann quer (senkrecht zur Maschinenrichtung) gestreckt wird, bevorzugt ist.

Zunächst wird wie beim Coextrusionsverfahren üblich das Polymere oder die Polymermischung der einzelnen Schichten in einem Extruder komprimiert und verflüssigt, wobei die zuzusetzenden Additive als Masterbatch zugegeben werden. Die Schmelzen werden dann gleichzeitig durch eine Flachdüse (Breitschlitzdüse) gepreßt, und die ausgepreßte mehrschichtige Folie wird auf einer oder mehreren Abzugswalzen, die durch Kühlung auf 30 bis 50 °C gehalten werden, abgezogen, wobei sie abkühlt und sich verfestigt.

Die so erhaltene Folie wird dann längs und quer zur Extrusionsrichtung gestreckt, was zu einer Orientierung der Molekülketten führt. In Längsrichtung wird vorzugsweise 4:1 bis 7:1 und in Querrichtung vorzugsweise 8:1 bis 10:1 gestreckt. Das Längsstrecken wird man zweckmäßigerweise mit Hilfe zweier entsprechend dem angestrebten Streckverhältnis verschieden schnellaufender Walzen durchführen und das Querstrecken mit Hilfe eines entsprechenden Kluppenrahmens. Die biaxiale Streckung wird besonders günstig bei leicht erhöhter Temperatur der Folie durchgeführt, die Längsstreckung vorzugsweise bei 120 bis 140 °C und die Querstreckung vorzugsweise bei 160 bis 175 °C.

An die biaxiale Streckung der Folie schließt sich ihre Thermofixierung (Wärmebehandlung) an, wobei die Folie etwa 0,5 bis 10 s lang bei einer Temperatur von 150 bis 160 °C gehalten wird. Anschließend wird die Folie in üblicher Weise mit einer Aufwickeleinrichtung aufgewickelt.

Vorteilhafterweise erfolgt direkt beim Aufwickeln der Folie nach ihrer Herstellung die vorstehend beschriebene Belegung der Deckschicht mit Polydialkylsiloxan, da hierbei die beiden verschiedenen Schichten zwangsläufig aufeinander zu liegen kommen. Der durch das Aufwickeln erzeugte Druck gewährleistet die notwendige Intensität des Kontaktes der beiden aufeinanderliegenden Oberflächen, so daß bereits nach kurzer Zeit (einige Minuten) die geforderte Belegung vorliegt.

Wie oben erwähnt wird die Deckschicht C der Folie nach der biaxialen Streckung nach einer der bekannten Methoden corona- oder flammbehandelt. Es ist wesentlich, daß dieser Verfahrensschritt vor der Belegung der Oberfläche C, d. h. vor der Kontaktübertragung des Siloxans z. B. durch Aufwickeln der Folie erfolgt. Zur Coronabehandlung wird zweckmäßigerweise so vorgegangen, daß die Folie zwischen zwei als Elektroden dienenden Leiterelementen hindurchgeführt wird, wobei zwischen den Elektroden eine so hohe Spannung, meist Wechselspannung (etwa 10 000 V und 10 000 Hz), angelegt ist, daß Sprüh- oder Coronaentladungen stattfinden können. Durch die Sprüh- oder Coronaentladung wird die Luft oberhalb der Folienoberfläche ionisiert und reagiert mit den Molekülen der Folienoberfläche, so daß polare Einlagerungen in der im wesentlichen unpolaren Polymermatrix entstehen. Die Behandlungsintensitäten liegen im üblichen Rahmen, vorzugsweise zwischen 36 und 42 mN/m.

Die Additive wie beispielsweise das hochviskose Polydialkylsiloxan werden bei der Folienherstellung in Form eines Masterbatches zugegeben. Unter dem Begriff Masterbatch ist eine Mischung aus dem Kunststoffrohstoff und einer hohen Menge an Additiv zu verstehen. Diese Mischung wird bevorzugt im Extruder dem polymeren Rohstoff zugesetzt und vermischt, wobei die zugesetzte Menge auf die gewünschte Konzentration an Additiv abzustimmen ist. Das im erfindungsgemäßen Verfahren eingesetzte Masterbatch enthält zwischen 6 und 18 Gew.-% (bezogen auf das Gesamtgewicht der Masterbatch-Mischung) an Additiven.

Die erfindungsgemäße Mehrschichtfolie zeichnet sich insbesondere durch hervorragende Siegeleigenschaften in Kombination mit einer niedrigen Folientrübung, einem hohen Oberflächenglanz und einer homogenen Folienoptik aus. Insbesondere bezüglich der Siegeleigenschaften zeigt die Folie die gewünschte einseitig niedrige Siegelanspringtemperatur, während die andere Seite im üblichen Temperaturbereich siegelt, wobei insgesamt eine hervorragende Siegelnahtfestigkeit erhalten bleibt.

So wurde bei der Bestimmung der Eigenschaften verschiedener Ausführungsformen eine Siegelnahtfestigkeit nach der T-Peel-Methode von größer als 1,4 bzw. 2,5 N/15 mm festgestellt. Der in Anlehnung an ASTM D 1003 gemessene Trübungswert liegt durchweg unter 17 %, und der in Anlehnung an ASTM D 2457 gemessene Glanz ist bei einem Meßwinkel von beispielsweise 20° größer als 115.

Überraschenderweise zeigen die erfindungsgemäßen Mehrschichtfolien neben ihrer gewünschten Siegelnahtfestigkeit eine hervorragende Bedruckbarkeit, die insbesondere ungewöhnlich langzeitbeständig ist, wobei überraschenderweise durch die Coronabehandlung die besagte gute Siegelnahtfestigkeit nicht beeinträchtigt wird.

Des weiteren wurde völlig unerwartet eine erhöhte Kratzfestigkeit der Deckschichten bei einem gleichzeitig guten Reibungsverhalten festgestellt, wodurch die Folie hervorragend auch auf schnellaufenden Verpackungsmaschinen zu verwenden ist.

Darüber hinaus ergaben Messungen (der Oberflächenspannung), daß die erfindungsgemäße Folie eine hohe Oberflächenspannung aufweist, die unerwarteterweise auch nach einer mehrmonatigen Lagerzeit nur unerheblich abfällt.

Zusammenfassend ist festzustellen, daß sich die erfindungsgemäße Mehrschichtfolie durch eine Vielzahl vorteilhafter Eigenschaften auszeichnet, insbesondere durch

einen sehr hohen Glanz,
eine geringe Trübung,
einseitig niedrige Siegelanspringtemperatur,
ein gutes Reibungsverhalten,
sehr gute Kratzfestigkeit,
eine gute Kurz- und Langzeitbedruckbarkeit,
eine hohe Oberflächenspannung,
eine gute Langzeitbeständigkeit der Oberflächenspannung und
eine hervorragende Siegelnahtfestigkeit, die auch durch die Coronabehandlung nicht beeinträchtigt wird.

Durch diese überraschende Vielzahl ausgezeichneter Eigenschaften wird erfindungsgemäß eine Folie zur Verfügung gestellt, die sich für verschiedene Verwendungszwecke gleichermaßen hervorragend eignet, insbesondere als Verpackungsfolie auf schnellaufenden Verpackungsmaschinen. Darüber hinaus ist die Folie ausgezeichnet als Trägerfolie für die Herstellung von Laminaten mit Papier, Pappe, Metallen, metallisierten Kunststoffolien und Kunststoffolien sehr gut geeignet.

Die Erfindung wird nun anhand von Ausführungsbeispielen noch näher erläutert.

**Beispiel 1**

Nach dem Coextrusionsverfahren wird aus einer Breitschlitzdüse bei einer Extrusionstemperatur von 260 °C als Summe eine 1 mm dicke Dreischichtfolie mit einem Schichtaufbau ABC extrudiert, d. h. die Basisschicht B ist von zwei verschiedenen Deckschichten AC umgeben.

Die Basisschicht besteht im wesentlichen aus einem peroxidisch abgebauten, isotaktischen Polypropylenhomopolymerisat mit einem n-heptanlöslichen Anteil von 4,5 Gew.-% und einem Schmelzpunkt von 165 °C. Der Schmelzflußindex des Polypropylen-Homopolymeren liegt vor dem Zusatz von Peroxiden bei $MFI_1$ = 0,7 g/10 min bei 230 °C und 21,6 N Belastung (DIN 53 735) und wird dann durch Zusatz von Di-t-butylperoxid auf einen Schmelzflußindex von $MFI_2$ = 3,5 g/10 min abgebaut, woraus sich ein Abbaufaktor von 5 ergibt.

Die Basisschicht ist von den verschiedenen Siegelschichten (Außenschichten, Deckschichten) umgeben, d. h. die Dreischichtfolie zeigt einen ABC-Aufbau (A und C = Siegelschichten, B = Basisschicht).

Alle Schichten enthalten zur Stabilisierung 0,12 Gew.-% Pentaerythrityl-Tetrakis-4-(3,5-ditertiärbutyl-4-hydroxyphenyl)-propionat (®Irganox 1010) sowie zur Neutralisierung saurer Katalysatorreste 0,06 Gew.-% Calciumstearat. Die Basisschicht enthält weiterhin 0,15 Gew.-% an N,N'-bis-(2-hydroxyethyl)-($C_{10}$-$C_{20}$)-alkylamin (®Armostat 300) als Antistatikum.

Die Deckschicht A besteht im wesentlichen, d. h. aus 97,4 Gew.-% einer Polymermischung, die sich aus

$a_1$) 50 Gew.-% eines Ethylen-Propylen-Butylen-Terpolymeren, bestehend aus 1,4 Gew.-% Ethylen, 2,8 Gew.-% Butylen und 95,8 Gew.-% Propylen (jeweils bezogen auf das Terpolymere), sowie
$a_2$) 50 Gew.-% eines Propylen-Butylen-Copolymeren, bestehend aus 66,8 Gew.-% Propylen und 33,2 Gew.-%

Butylen (bezogen jeweils auf das Copolymere), zusammensetzt ( $a_1 + a_2$ = TAFMER XR-107 L ), was einem Gehalt von 0,7 Gew.-% Ethylen, 81,3 Gew.-% Propylen und 18 Gew.-% Butylen, bezogen auf das TAFMER XR-107 L, entspricht. Diese Polymermischung $a_1 + a_2$ hatte einen Schmelzflußindex von 8 g/10 min und einen Schmelzpunkt von 150 °C.

Zusätzlich sind in der Deckschicht A

b) 0,2 Gew.-%, bezogen auf die Deckschicht, an Siliciumdioxid mit einem mittleren Teilchendurchmesser von 4,0 μm und

c) 2,4 Gew.-%, bezogen auf die Deckschicht, an Polydimethylsiloxan mit einer kinematischen Viskosität von 500 000 $mm^2$/s bei 25 °C enthalten.

Das hochviskose Polydimethylsiloxan wird der obengenannten Polymermischung (TAFMER XR-107 L) vor dem Extrudieren über ein Masterbatch zugegeben. Das Masterbatch besteht aus 12 Gew.-% des hochviskosen Polydimethylsiloxans und 88 Gew.-% der Polymermischung (TAFMER XR-107 L).

Die Deckschicht B besteht im wesentlichen aus einem Propylen-Ethylen-Copolymeren mit 5 Gew.-% Ethylen und 0,3 Gew.-%, bezogen auf die Deckschicht, zugesetztem Siliciumdioxid mit einem mittleren Teilchendurchmesser von 2 bis 4 μm.

Das statistische Ethylen-Propylen-Copolymerisat der Deckschicht C wird von einem Ausgangs-Schmelzindex $MFI_1$ von 0,7 g/10 min (DIN 53 735 bei 21,6 N Belastung und 230 °C) durch Zusatz von Di-t-butylperoxid auf einen Granulatschmelzindex $MFI_2$ von 5,6 g/10 min (DIN 53 735 bei 21,6 N Belastung und 230 °C) abgebaut, woraus sich ein Abbaufaktor A von 8 ergibt.

Die Dreischichtfolie wird auf einer 30 °C warmen Kühlwalze abgeschreckt. Danach wird die Folie von der Kühlwalze auf ein Walzentrio von ebenfalls 30 °C übergeben und nach Erwärmung auf 130 °C von einem weiteren Walzentrio um den Faktor 5 längsgestreckt. Anschließend wird sie bei 175 °C Lufttemperatur auf das 10fache in Querrichtung verstreckt. Anschließend erfolgt die Coronabehandlung der Deckschicht C mit einer Wechselspannung von etwa 10 000 V und 10 000 Hz. Die so hergestellte Folie besitzt direkt nach der Herstellung auf der behandelten Seite (Deckschicht C) eine Oberflächenspannung von 39 bis 40 mN/m. Anschließend wird mit einer Aufwickeleinrichtung aufgewikkelt, wobei gleichzeitig die vorgehend beschriebene Polydimethylsiloxan-Belegung der Deckschicht C erfolgt.

Die so gebildete Mehrschichtfolie hat eine ca. 19 μm dicke Basisschicht aus peroxidisch abgebautem Polypropylen und auf jeder Seite eine Deckschicht der Dicke 0,8 bis 0,9 μm.

**Beispiel 2**

Beispiel 1 wird wiederholt.

Das isotaktische Propylen-Homopolymerisat der Basisschicht wurde jedoch von einem Polypropylen-Ausgangspulver mit einen Schmelzindex $MFI_1$ von 0,5 g/10 min (bestimmt nach DIN 53 735 bei 21,6 N Belastung und 230 °C) durch Zusatz von Di-t-butylperoxid auf einen Granulatschmelzindex $MFI_2$ von 3,5 g/10 min (DIN 53 735 bei 21,6 N Belastung und 230 °C) abgebaut, woraus sich ein Abbaufaktor A von 7 ergibt.

**Beispiel 3**

Beispiel 1 wird wiederholt.

Die nicht coronabehandelte Deckschicht A besteht aus 98,6 Gew.-% der in Beispiel 1 beschriebenen Polymermischung (TAFMER XR-107 L), 0,2 Gew.-%, bezogen auf die Deckschicht, Siliciumdioxid mit einem mittleren Teilchendurchmesser von 4,0 μm und 1,2 Gew.-%, bezogen auf die Deckschicht, an Polydimethylsiloxan mit einer kinematischen Viskosität von 500 000 $mm^2$/s bei 25 °C.

**Beispiel 4**

Beispiel 3 wird wiederholt.

Das hochviskose Polydimethylsiloxan wird jedoch über ein Masterbatch zugegeben, das aus 8 Gew.-% Polysiloxan mit einer kinematischen Viskosität von 500 000 $mm^2$/s bei 25 °C und 92 Gew.-% des genannten Polymergemisches (TAFMER XR-107 L) besteht.

**Beispiel 5**

Beispiel 1 wird wiederholt.

Das Polydimethylsiloxan, welches der Deckschicht A, die nicht coronabehandelt wird, zugesetzt wird, besitzt eine kinematische Viskosität von 300 000 mm$^2$/s bei 25 °C.

**Beispiel 6**

Beispiel 1 wird wiederholt.

Die Deckschicht C besteht aus Ethylen-Propylen-Buten-1-Terpolymeren mit einem Ethylengehalt von 1,5 Gew.-% und einem Buten-1-Gehalt von 7 Gew.-% und 0,3 Gew.-% Siliciumdioxid mit einem mittleren Teilchendurchmesser von 4 μm, bezogen auf die Deckschicht. Das Terpolymere wird nicht peroxidisch abgebaut und besitzt einen Schmelzindex von 4,5 g/10 min (DIN 53 735 bei 21,6 N Belastung und 230 °C).

**Beispiel 7**

Beispiel 6 wird wiederholt.

Das Terpolymere der Deckschicht C wird von einem Ausgangsschmelzindex MFI$_1$ von 0,9 g/10 min durch Zusatz von Di-t-butylperoxid auf einen Granulatschmelzindex MFI$_2$ von 6,3 g/10 min abgebaut, wodurch sich ein Abbaufaktor von 7 ergibt.

**Vergleichsbeispiel 1**

Beispiel 1 wird wiederholt.

Das isotaktische Propylen-Homopolymerisat besitzt ebenfalls einen Granulatschmelzindex MFI$_2$ von 3,5 g/10 min (DIN 53 735 bei 21,6 N Belastung und 230 °C). Das Polypropylenpolymere der Basissicht ist aber nicht peroxidisch abgebaut.

**Vergleichsbeispiel 2**

Beispiel 1 wird wiederholt.

Das Polydimethylsiloxan, welches der Deckschicht A als Gleitmittel zugegeben wird, besitzt eine kinematische Viskosität von 30 000 mm$^2$/s bei 25 °C.

**Vergleichsbeispiel 3**

Beispiel 1 wird wiederholt.

Die gebildete Dreischichtfolie besitzt Deckschichten, die eine Dicke von 0,3 μm haben.

**Vergleichsbeispiel 4**

Es wird eine Dreischichtfolie entsprechend Beispiel 1 der EP-A-0 114 312 hergestellt. Die Deckschichten A und C sind gleich aufgebaut und bestehen im wesentlichen aus

a) 79 Gew.-%, bezogen auf die Deckschicht, einer Polymermischung, die sich aus

a$_1$) 50 Gew.-% eines Ethylen-Propylen-Butylen-Terpolymeren, bestehend aus 1,4 Gew.-% Ethylen, 2,8 Gew.-% Butylen und 95,8 Gew.-% Propylen (jeweils bezogen auf das Terpolymere), sowie
a$_2$) 50 Gew.-% eines Propylen-Butylen-Copolymeren, bestehend aus 66,8 Gew.-% Propylen und 33,2 Gew.-% Butylen (bezogen jeweils auf das Copolymere),

zusammensetzt, was einem Gehalt von 0,7 Gew.-% Ethylen, 81,3 Gew.-% Propylen und 18 Gew.-% Butylen, bezogen auf die Polymermischung, entspricht (diese Mischung a$_1$ + a$_2$ hat einen Schmelzflußindex von 8 g/10 min und einen Schmelzpunkt von 150 °C), und
b) 10 Gew.-%, bezogen auf die Deckschicht, von einem hydrierten Kohlenwasserstoffharz mit einem Erweichungspunkt von 125 °C.

Zusätzlich enthalten die Deckschichten

c) 10 Gew.-%, bezogen auf die Deckschicht, eines Propylen-Homopolymers mit einem Schmelzpunkt von 126 °C und

d) 1 Gew.-%, bezogen auf die Deckschicht, an Polydimethylsiloxan einer kinematischen Viskosität von 30 000 mm$^2$/s bei 25 °C.

**Vergleichsbeispiel 5**

Beispiel 1 wird wiederholt, jedoch bestehen die Deckschichten beide aus einem statistischen Ethylen-Propylen-Copolymerisat mit 4,5 Gew.-% Ethylen ohne weitere Zusätze (Vergleich gegen DE-A-16 94 694).

**Vergleichsbeispiel 6**

Beispiel 1 wird wiederholt, jedoch wird für die Deckschichten der Rohstoff nach Beispiel 2 der EP-B-0 027 586, eingesetzt.

**Vergleichsbeispiel 7**

Es wird eine Dreischichtfolie entsprechend der EP-B- 0184 094 hergestellt.

**Charakterisierung der Rohstoffe**

Zur Charakterisierung der Rohstoffe und Folien werden die folgenden Meßmethoden benutzt:

Erweichungspunkt

ASTM E 28

Schmelzpunkt

DSC-Messung, Maximum der Schmelzkurve, Aufheizgeschwindigkeit 20 °C/min.

Bestimmung der Niederdruck-Siegelnahtfestigkeit

Zwei 15 mm breite Folienstreifen werden übereinandergelegt und bei 110 °C, einer Siegelzeit von 0,5 s und einem Siegeldruck von 1,5 N/cm$^2$ (Gerät: Brugger, Typ NDS, einseitig beheizte Siegelbacke) versiegelt. Die Siegelnahtfestigkeit wird nach der T-Peel-Methode bestimmt.

Bestimmung der Siegelanspringtemperatur

Mit dem Siegelgerät HSG/ET der Fa. Brugger werden heißgesiegelte Proben (Siegelnaht 20 mm x 100 mm) hergestellt, indem eine Folie bei unterschiedlichen Temperaturen mit Hilfe zweier beheizter Siegelbacken bei einem Siegeldruck von 15 N/cm$^2$ und einer Siegeldauer von 0,5 s gesiegelt wird. Aus den gesiegelten Proben werden Prüfstreifen von 15 mm Breite geschnitten. Die T-Siegelnahtfestigkeit, d. h. die zur Trennung der Prüfstreifen erforderliche Kraft, wird mit einer Zugprüfmaschine bei 200 mm/min Abzugsgeschwindigkeit bestimmt, wobei die Siegelnahtebene einen rechten Winkel mit der Zugrichtung bildet.

Die Siegelanspringtemperatur (oder minimale Siegeltemperatur) ist die Temperatur, bei der eine Siegelnahtfestigkeit von 0,5 N/15 mm erreicht wird.

Maschinengängigkeit

Die Bestimmung der Maschinengängigkeit (Laufsicherheit) auf der vertikalen Formfüllschließmaschine (vFFs), der horizontalen Formfüllschließmaschine (hFFs) und der Einschlagmaschine erfolgte visuell und wurde wie folgt bewertet:

| sehr gut(+ +) | < 2 % der Probepäckchen sind mangelhaft eingeschlagen |
|---|---|
| gut (+) | 2 bis 6 % der Probepäckchen sind mangelhaft eingeschlagen |
| mäßig (+-) | 6 bis 12 % der Probepäckchen sind mangelhaft eingeschlagen |
| schlecht (-) | 12 % und mehr der Probepäckchen sind mangelhaft eingeschlagen |

Bestimmung der Coronabehandlungsintensität

Die Coronabehandlung wurde so ausgeführt, daß die behandelte Folienoberfläche jeweils eine Behandlungsintensität von 39 bis 41 mN/m direkt nach der Behandlung besaß. Die Behandlungsintensität wird mit der sogenannten Tintenmethode bestimmt (DIN 53 364).

Bestimmung der Bedruckbarkeit

Die coronabehandelten Folien wurden 14 Tage nach ihrer Produktion (Kurzzeitbeurteilung) bzw. 6 Monate nach ihrer Produktion (Langzeitbeurteilung) bedruckt. Die Farbhaftung wurde mittels Klebebandtest beurteilt. Konnte mittels Klebeband keine Farbe abgelöst werden, so wurde die Farbhaftung mit gut und bei deutlicher Farbablösung mit schlecht beurteilt.

Schmelzflußindex

DIN 53 735 bei 230 °C und 21,6 N Belastung

Trübung

Die Trübung der Folie wird in Anlehnung an ASTM-D 1003-52 gemessen, wobei anstelle einer 4°-Lochblende eine 1°-Spaltblende eingesetzt und die Trübung in Prozent für vier übereinanderliegende Folienlagen angegeben wird. Die vier Lagen wurden gewählt, da man hierdurch den optimalen Meßbereich ausnutzt. Die Trübungsbewertung erfolgte mit:

$$< 17\ \% = \text{sehr gut (+ +)}$$

$$\geq 17\ \% \text{ bis } 20\ \% = \text{gut (+)}$$

$$\geq 20\ \% \text{ bis } 25\ \% = \text{mäßig } (\pm)$$

$$\geq 25\ \% = \text{schlecht (-)}$$

Glanz

Der Glanz wird nach DIN 67 530 bestimmt. Gemessen wird der Reflektorwert als optische Kenngröße für die Oberfläche einer Folie. Angelehnt an die Normen ASTM-D 523-78 und ISO 2813 wurde der Einstrahlwinkel mit 20° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Meßwert ist dimensionslos und muß mit dem Einstrahlwinkel angegeben werden. Die Glanzbewertung (Einstrahlwinkel 20°) erfolgt mit:

$$> 115 = \text{sehr gut (+ +)}$$

$$\leq 115 \text{ bis } 110 = \text{gut (+)}$$

$$\leq 110 \text{ bis } 100 = \text{mäßig } (\pm)$$

$$\leq 100 = \text{schlecht (-)}$$

Kratzfestigkeit bzw. Kratzempfindlichkeit

Die Kratzfestigkeit wird in Anlehnung an DIN 53 754 bestimmt.
Für die Bestimmung der Kratzfestigkeit wird das Abriebmeßgerät Taber Modell 503 Abraser der Firma Teledyne Taber benutzt, wobei Reibräder der Marke Calibrade R H18, die mit 250 g belastet werden, eingesetzt werden. Unter Kratzfestigkeit bzw. Kratzempfindlichkeit versteht man die Trübungszunahme der verkratzten Folie im Vergleich zur Originalfolie nach 50 Umdrehungen des Probentellers. Die Kratzfestigkeit wird mit sehr gut (+ +) bezeichnet, wenn die Trübungszunahme weniger als 22 % beträgt, mit gut (+), wenn die Trübungszunahme bei 22 bis 25 % liegt, mit mäßig (±), wenn die Trübungszunahme bei 25 bis 30 % liegt und mit schlecht (-) bei Trübungszunahmen von größer 30 %.

In der nachstehenden Tabelle sind die Eigenschaften der dreischichtigen Polyolefinfolien der Beispiele und Vergleichsbeispiele zusammengefaßt.

Die Überlegenheit der erfindungsmäßen Folien entsprechend den Beispielen 1 bis 7 geht aus der Tabelle deutlich hervor. Die Vergleichsbeispiele 1 bis 7 zeigen zwar bei einzelnen Punkten vergleichbare Eigenschaften, allerdings kann keine Mehrschichtfolie nach den Vergleichsbeispielen 1 bis 7 alle Anforderungen gleichzeitig erfüllen. Nur die erfindungsgemäßen Folien weisen eine einseitig niedrige Siegelanspringtemperatur bei beidseitig hoher Siegelnahtfestigkeit auf und gewährleisten zusätzlich eine niedrige Folientrübung, hohen Oberflächenglanz und eine homogene Folienoptik, zusätzlich sind die gute Kratzfestigkeit und die gute, langzeitstabile Bedruckbarkeit sowie die gute Laufsicherheit der Folie (Maschinengängigkeit) auf schnellaufenden Verpackungsmaschinen unterschiedlichen Typs (vFFs-, hFFs- und Einschlagmaschine) hervorzuheben. Lediglich die erfindungsgemäßen polyolefinischen Mehrschichtfolien aus den Beispielen 1 bis 7 erfüllen alle diese Anforderungen gleichzeitig.

| Beispiele | Trübung 4-lagig [%] | Glanz (Meßwinkel 20°) 1. Seite | 2. Seite | Folienoptik (visuelle Beurteilung) | Kratzfestigkeit [%] 1. Seite | 2. Seite | Siegelanspring-temperatur (10 N/cm ,0,5 s) [°C] 1. Seite | 2. Seite | Siegelnahtfestigkeit (110 °C, 1,5 N/cm , 0,5 s) [N/15 mm] 1./1. Seite | (125 °C, 1,5 N/cm , 0,5 s) [N/15 mm] 1./2. Seite | Bedruck-barkeit | Maschinen-gängigkeit (visuelle Beurteilung) vFFs-maschine | hFFs-maschine | Einschlag-maschine |
|---|---|---|---|---|---|---|---|---|---|---|---|---|---|---|
| B1 | ++ | ++ | ++ | homogen | ++ | ++ | 88 | 122 | 2,6 | 1,5 | ++ | ++ | ++ | ++ |
| B2 | ++ | ++ | ++ | homogen | ++ | ++ | 88 | 122 | 2,6 | 1,5 | ++ | ++ | ++ | ++ |
| B3 | ++ | ++ | ++ | homogen | ++ | ++ | 88 | 122 | 2,7 | 1,6 | ++ | ++ | ++ | ++ |
| B4 | ++ | ++ | ++ | homogen | ++ | ++ | 88 | 122 | 2,7 | 1,6 | ++ | ++ | ++ | ++ |
| B5 | ++ | ++ | ++ | homogen | ++ | ++ | 88 | 122 | 2,6 | 1,4 | ++ | ++ | ++ | ++ |
| B6 | ++ | ++ | ++ | homogen | ++ | ++ | 88 | 120 | 2,7 | 1,6 | ++ | ++ | ++ | ++ |
| B7 | ++ | ++ | ++ | homogen | ++ | ++ | 88 | 120 | 2,6 | 1,6 | ++ | ++ | ++ | ++ |
| Vergleichs-beispiele | | | | | | | | | | | | | | |
| VB1 | +/- | +/- | +/- | homogen | ++ | ++ | 89 | 122 | 2,6 | 1,5 | ++ | + | + | + |
| VB2 | ++ | ++ | ++ | Fließstörungen | ++ | ++ | 88 | 122 | 2,6 | 1,5 | ++ | + | + | + |
| VB3 | ++ | ++ | ++ | homogen | +/- | +/- | 100 | 128 | 1,0 | 0,4 | +/- | +/- | +/- | +/- |
| VB4 | - | - | - | Fließstörungen | +/- | +/- | 94 | >130 | 1,8 | 0 | - | +/- | +/- | +/- |
| VB5 | +/- | +/- | +/- | homogen | - | - | 122 | 122 | 0 | 0,5 | ++ | - | - | - |
| VB6 | - | - | - | Fließstörungen | +/- | +/- | 120 | >130 | 0 | 0 | - | +/- | +/- | +/- |
| VB7 | +/- | +/- | +/- | Fließstörungen | - | - | 88 | >130 | 2,6 | 0 | - | +/- | +/- | +/- |

B : Beispiel
VB : Vergleichsbeispiel
vFFs- : vertikale Form- Füllschließ-
hFFs- : horizontale Form- Füllschließ-

**EP 0 557 875 B1**

**Patentansprüche**

1. Beidseitig siegelnde, transparente, bedruckbare, biaxial orientierte Polyolefin-Mehrschichtfolie aus einer Basisschicht B und beidseitig darauf angeordneten verschiedenen Deckschichten A und C entsprechend einem Schichtaufbau ABC, wobei

   a) die Basisschicht B ein peroxidisch abgebautes Polypropylenpolymeres und gegebenenfalls zugesetzte Additive enthält und der Abbaufaktor für das peroxidisch abgebaute Polypropylenpolymere im Bereich von 3 bis 10 liegt und

   b) die Deckschicht A eine Polymermischung aus zwei oder mehreren der im folgenden genannten Co- und/oder Terpolymeren:

   ein Copolymeres von

   Ethylen und Propylen oder
   Ethylen und Butylen oder
   Propylen und Butylen oder
   Ethylen und einem anderen $\alpha$-Olefin mit 5 bis 10 Kohlenstoffatomen oder
   Propylen und einem anderen $\alpha$-Olefin mit 5 bis 10 Kohlenstoffatomen oder

   ein Terpolymeres von

   Ethylen und Propylen und Butylen oder
   Ethylen und Propylen und einem anderen $\alpha$-Olefin mit 5 bis 10 Kohlenstoffatomen und

   ein hochviskoses Polydiorganosiloxan und Siliciumdioxid und gegebenenfalls weitere zugesetzte Additive enthält und

   c) die Deckschicht C

   ein Copolymeres von

   Ethylen und Propylen oder
   Ethylen und Butylen oder
   Propylen und Butylen oder
   Ethylen und einem anderen $\alpha$-Olefin mit 5 bis 10 Kohlenstoffatomen oder
   Propylen und einem anderen $\alpha$-Olefin mit 5 bis 10 Kohlenstoffatomen oder

   ein Terpolymeres von

   Ethylen und Propylen und Butylen oder
   Ethylen und Propylen und einem anderen $\alpha$-Olefin mit 5 bis 10 Kohlenstoffatomen und

   gegebenenfalls zugesetzte Additive in jeweils wirksamen Mengen enthält und auf ihrer äußeren Oberfläche eine nicht zusammenhängende Belegung mit Polydialkylsiloxan aufweist.

2. Polyolefin-Mehrschichtfolie nach Anspruch 1, dadurch gekennzeichnet, daß das hochviskose Polydiorganosiloxan eine Viskosität von größer 50.000 mm$^2$/s und das Siliciumdioxid einen mittleren Teilchendurchmesser von 2 bis 6 µm aufweist.

3. Polyolefin-Mehrschichtfolie nach einem der Ansprüche 1 und/oder 2, dadurch gekennzeichnet, daß die Polymermischung der Deckschicht A aus zwei oder mehreren der folgenden Co- und/oder Terpolymeren besteht:

   Statistische Ethylen-Propylen-Copolymere mit

   einem Ethylengehalt von 2 bis 10 Gew.-%, bevorzugt 3 bis 6 Gew.-%, oder

   statistische Propylen-Butylen-1-Copolymere mit

**16**

einem Butylengehalt von 4 bis 25 Gew.-%, bevorzugt 10 bis 20 Gew.-%,
jeweils bezogen auf das Gesamtgewicht des Copolymeren, oder

statistische Ethylen-Propylen-Butylen-1-Terpolymere mit

einem Ethylengehalt von 1 bis 10 Gew.-%, bevorzugt 2 bis 6 Gew.-%, und
einem Butylen-1-Gehalt von 3 bis 20 Gew.-%, bevorzugt 8 bis 10 Gew.-%,
jeweils bezogen auf das Gesamtgewicht des Terpolymeren.

4. Polyolefin-Mehrschichtfolie nach einem oder mehreren der Ansprüche 1 bis 3, dadurch gekennzeichnet, daß die Polymermischung der Deckschicht A aus einer Mischung von einem Ethylen-Propylen-Butylen-1-Terpolymeren und einem Propylen-Butylen-1-Copolymeren

mit einem Ethylengehalt von 0,1 bis 7 Gew.-%
und einem Propylengehalt von 50 bis 90 Gew.-%
und einem Butylen-1-Gehalt von 10 bis 40 Gew.-%,
bezogen auf das Gesamtgewicht der Polymermischung besteht.

5. Polyolefin-Mehrschichtfolie nach einem oder mehreren der Ansprüche 1 bis 4, dadurch gekennzeichnet, daß die Deckschicht C als weiteres Additiv Siliciumdioxid mit einem mittleren Teilchendurchmesser von 2 bis 6 μm enthält und die relative Siloxanbelegung der Oberfläche kleiner als 20 ist.

6. Polyolefin-Mehrschichtfolie nach einem oder mehreren der Ansprüche 1 bis 5, dadurch gekennzeichnet, daß die Deckschicht C

ein statistisches Ethylen-Propylen-Copolymeres mit

einem Ethylengehalt von 2 bis 8 Gew.-%, bevorzugt 3 bis 6 Gew.-%, oder

ein statistisches Propylen-Butylen-1-Copolymeres mit

einem Butylengehalt von 4 bis 25 Gew.-%, bevorzugt 10 bis 20 Gew.-%,
jeweils bezogen auf das Gesamtgewicht des Copolymeren, oder

ein statistisches Ethylen-Propylen-Butylen-1-Terpolymeres mit

einem Ethylengehalt von 1 bis 10 Gew.-%, bevorzugt 2 bis 6 Gew.-%, und
einem Butylen-1-Gehalt von 3 bis 15 Gew.-%, bevorzugt 8 bis 10 Gew.-%,
bezogen auf das Gesamtgewicht des Terpolymeren,

enthält.

7. Polyolefin-Mehrschichtfolie nach einem oder mehreren der Ansprüche 1 bis 6, dadurch gekennzeichnet, daß der Schmelzflußindex (DIN 53 735) der Polymermischung der Deckschicht A zwischen 1 g/10 min und 16 g/10 min liegt.

8. Polyolefin-Mehrschichtfolie nach einem oder mehreren der Ansprüche 1 bis 7, dadurch gekennzeichnet, daß der Schmelzflußindex (DIN 53 735) des Propylenpolymeren der Basisschicht B nach dem peroxidischen Abbau zwischen 2 g/10 min und 5,5 g/10 min liegt.

9. Polyolefin-Mehrschichtfolie nach einem oder mehreren der Ansprüche 1 bis 8, dadurch gekennzeichnet, daß der Schmelzflußindex (DIN 53 735) des Co-oder Terpolymeren der Deckschicht C kleiner 3,0 g/10 min ist.

10. Polyolefin-Mehrschichtfolie nach einem oder mehreren der Ansprüche 1 bis 9, dadurch gekennzeichnet, daß das Co- oder Terpolymere der Deckschicht C peroxidisch abgebaut ist, wobei der Schmelzflußindex nach dem Abbau auf einen Bereich von 5,5 bis 15 g/10 min erhöht ist.

11. Polyolefin-Mehrschichtfolie nach einem oder mehreren der Ansprüche 1 bis 10, dadurch gekennzeichnet, daß die

EP 0 557 875 B1

Dicke der Deckschicht/en, gegebenenfalls unabhängig voneinander, zwischen 0,6 und 3,0 µm liegt.

**12.** Polyolefin-Mehrschichtfolie nach einem oder mehreren der Ansprüche 1 bis 11, dadurch gekennzeichnet, daß die Gesamtdicke der Mehrschichtfolie zwischen 6 und 70 µm liegt.

**13.** Polyolefin-Mehrschichtfolie nach einem oder mehreren der Ansprüche 1 bis 12, dadurch gekennzeichnet, daß die Basisschicht und/oder die Deckschicht/en als zusätzliche Additive Antistatika und/oder Antiblockmittel und/oder Gleitmittel und/oder Stabilisatoren und/oder Neutralisationsmittel enthält/enthalten.

**14.** Verfahren zur Herstellung der Polyolefin-Mehrschichtfolie nach Anspruch 1, wobei die den einzelnen Schichten der Folie entsprechenden Schmelzen durch eine Flachdüse coextrudiert werden, die so erhaltene Folie zur Verfestigung über eine Abzugswalze, deren Temperatur zwischen 30 und 50 °C liegt, abgezogen und abgekühlt wird, die Folie biaxial gestreckt wird mit einem Längsstreckverhältnis von 4:1 bis 7:1 und einem Querstreckverhältnis von 8:1 bis 10:1 und die biaxial gestreckte Folie thermofixiert wird, dadurch gekennzeichnet, daß die Deckschicht C coronabehandelt wird und anschließend durch Kontaktierung der beiden Deckschichten A und C die Deckschicht C mit einer nicht zusammenhängenden Schicht Polydialkylsiloxan belegt wird.

**15.** Verfahren nach Anspruch 14, dadurch gekennzeichnet, daß die jeweiligen Additive mittels Masterbatch zugegeben werden.

**16.** Verfahren nach Anspruch 14 und/oder 15, dadurch gekennzeichnet, daß die Additivkonzentration des Masterbatch zwischen 6 und 18 Gew.-%, bezogen auf das Gewicht der Gesamtmischung, liegt.

**17.** Verwendung der Polyolefinfolie gemäß einem oder mehreren der Ansprüche 1 bis 13 als Verpackungsfolie.

**18.** Verwendung der Polyolefinfolie gemäß einem oder mehreren der Ansprüche 1 bis 13 zur Herstellung von bedruckten Polyolefinfolien.

**19.** Verwendung der Polyolefinfolie gemäß einem oder mehreren der Ansprüche 1 bis 13 zur Herstellung von Laminaten.

**20.** Verwendung der Polyolefinfolie gemäß Anspruch 19 zur Herstellung von Laminaten mit Papier, Pappe, Metallen, metallisierten Kunststofffolien und Kunststofffolien.

**21.** Polyolefinfolie gemäß einem oder mehreren der Ansprüche 1 bis 13, dadurch gekennzeichnet, daß eine, gegebenenfalls beide Oberfläche/n mit einer Bedruckung versehen ist/sind.

**22.** Laminate, enthaltend eine Polyolefinfolie gemäß einem oder mehreren der Ansprüche 1 bis 13.

**23.** Verpackungen, enthaltend eine Polyolefinfolie gemäß einem oder mehreren der Ansprüche 1 bis 13.

**Claims**

**1.** Transparent, printable, biaxially oriented polyolefin multilayer film which can be sealed on both sides, comprising a base layer B and different top layers A and C located on both sides thereof corresponding to a layer build-up of ABC, wherein

a) the base layer B comprises a peroxidically degraded polypropylene polymer and optionally added additives, and the degradation factor for the peroxidically degraded polypropylene polymer is in the range from 3 to 10, and

b) the top layer A comprises a polymer mixture of two or more of the following co-and/or ter-polymers:

a copolymer of

ethylene and propylene or
ethylene and butylene or
propylene and butylene or

ethylene and another α-olefin having from 5 to 10 carbon atoms or
propylene and another α-olefin having from 5 to 10 carbon atoms, or

a terpolymer of

ethylene and propylene and butylene or
ethylene and propylene and another α-olefin having from 5 to 10 carbon atoms, and

a high-viscosity polydiorganosiloxane and silicon dioxide and optionally further added additives, and

c) the top layer C comprises

a copolymer of

ethylene and propylene or
ethylene and butylene or
propylene and butylene or
ethylene and another α-olefin having from 5 to 10 carbon atoms or
propylene and another α-olefin having from 5 to 10 carbon atoms, or

a terpolymer of

ethylene and propylene and butylene or
ethylene and propylene and another α-olefin having from 5 to 10 carbon atoms, and

optionally added additives in their respective effective amounts, and a non-cohesive covering of polydialkylsiloxane on its outer surface.

2. Polyolefin multilayer film according to claim 1, characterised in that the high-viscosity polydiorganosiloxane has a viscosity of greater than 50,000 mm$^2$/s and the silicon dioxide has an average particle diameter of from 2 to 6 μm.

3. Polyolefin multilayer film according to one of claims 1 and/or 2, characterised in that the polymer mixture of top layer A comprises two or more of the following co-and/or ter-polymers:

random ethylene/propylene copolymers having

an ethylene content of from 2 to 10 % by weight preferably from 3 to 6 % by weight, or

random propylene/1-butylene copolymers having

a butylene content of from 4 to 25 % by weight preferably from 10 to 20 % by weight,
in each case based on the total weight of the copolymer, or

random ethylene/propylene/1-butylene terpolymers having

an ethylene content of from 1 to 10 % by weight preferably from 2 to 6 % by weight, and
a 1-butylene content of from 3 to 20 % by weight, preferably from 8 to 10 % by weight,
in each case based on the total weight of the terpolymer.

4. Polyolefin multilayer film according to one or more of claims 1 to 3, characterised in that the polymer mixture of top layer A comprises a mixture of an ethylene/propylene/1-butylene terpolymer and a propylene/1-butylene copolymer

having an ethylene content of from 0.1 to 7 % by weight
and a propylene content of from 50 to 90 % by weight
and a 1-butylene content of from 10 to 40 % by weight,
based on the total weight of the polymer mixture.

5. Polyolefin multilayer film according to one or more of claims 1 to 4, characterised in that the top layer C comprises as a further additive silicon dioxide having an average particle diameter of from 2 to 6 μm, and the relative covering of the surface by siloxane is less than 20.

6. Polyolefin multilayer film according to one or more of claims 1 to 5, characterised in that the top layer C comprises

a random ethylene/propylene copolymer having

an ethylene content of from 2 to 8 % by weight, preferably from 3 to 6 % by weight, or

a random propylene/1-butylene copolymer having

a butylene content of from 4 to 25 % by weight, preferably from 10 to 20 % by weight, in each case based on the total weight of the copolymer, or

a random ethylene/propylene/1-butylene terpolymer having

an ethylene content of from 1 to 10 % by weight, preferably from 2 to 6 % by weight, and a 1-butylene content of from 3 to 15 % by weight, preferably from 8 to 10 % by weight, based on the total weight of the terpolymer.

7. Polyolefin multilayer film according to one or more of claims 1 to 6, characterised in that the melt flow index (DIN 53 735) of the polymer mixture of top layer A is from 1 g/10 minutes to 16 g/10 minutes.

8. Polyolefin multilayer film according to one or more of claims 1 to 7, characterised in that the melt flow index (DIN 53 735) of the propylene polymer of base layer B after peroxidic degradation is from 2 g/10 minutes to 5.5 g/10 minutes.

9. Polyolefin multilayer film according to one or more of claims 1 to 8, characterised in that the melt flow index (DIN 53 735) of the co- or ter-polymer of top layer C is less than 3.0 g/10 minutes.

10. Polyolefin multilayer film according to one or more of claims 1 to 9, characterised in that the co- or ter-polymer of top layer C is peroxidically degraded, the melt flow index after the degradation being increased to a range of from 5.5 to 15 g/10 minutes.

11. Polyolefin multilayer film according to one or more of claims 1 to 10, characterised in that the thickness of the top layer(s), optionally independently of one another, is from 0.6 to 3.0 μm.

12. Polyolefin multilayer film according to one or more of claims 1 to 11, characterised in that the total thickness of the multilayer film is from 6 to 70 μm.

13. Polyolefin multilayer film according to one or more of claims 1 to 12, characterised in that the base layer and/or the top layer(s) comprise(s) as additional additives antistatics and/or antiblocking agents and/or lubricants and/or stabilisers and/or neutralising agents.

14. Process for the production of a polyolefin multilayer film according to claim 1, wherein the melts corresponding to the individual layers of the film are coextruded through a flat die, the resulting film, for the purpose of consolidation, is taken off and cooled *via* a take-off roll having a temperature of from 30 to 50°C, the film is stretched biaxially with a longitudinal stretching ratio of from 4:1 to 7:1 and a transverse stretching ratio of from 8:1 to 10:1, and the biaxially stretched film is thermo-fixed, characterised in that the top layer C is subjected to corona treatment and then the top layer C is covered with a non-cohesive layer of polydialkylsiloxane by bringing the two top layers A and C into contact.

15. Process according to claim 14, characterised in that the additives in question are added by means of a masterbatch.

16. Process according to claim 14 and/or 15, characterised in that the additive concentration of the masterbatch is from 6 to 18 % by weight based on the weight of the total mixture.

**17.** Use of the polyolefin film according to one or more of claims 1 to 13 as a packaging film.

**18.** Use of the polyolefin film according to one or more of claims 1 to 13 in the production of printed polyolefin films.

**19.** Use of the polyolefin film according to one or more of claims 1 to 13 in the production of laminates.

**20.** Use of the polyolefin film according to claim 19 in the production of laminates with paper, cardboard, metals, metallised films of plastic, and films of plastic.

**21.** Polyolefin film according to one or more of claims 1 to 13, characterised in that one, optionally both, surface(s) is/are provided with print.

**22.** Laminates comprising a polyolefin film according to one or more of claims 1 to 13.

**23.** Packaging comprising a polyolefin film according to one or more of claims 1 to 13.

**Revendications**

**1.** Feuille multicouche de polyoléfine soumise à une orientation biaxe, apte à l'impression, transparente, thermosoudable sur les deux côtés, constituée par une couche de base B et par différentes couches de recouvrement A et C disposées de part et d'autre par-dessus cette dernière, conformément à une structure de couches ABC, dans laquelle

a) la couche de base B contient un polymère de polypropylène soumis à une décomposition à l'aide d'un peroxyde et, le cas échéant, des additifs ajoutés, le facteur de décomposition pour le polymère de polypropylène soumis à une décomposition à l'aide d'un peroxyde se situant dans le domaine de 3 à 10, et

b) la couche de recouvrement A contient un mélange polymère constitué par deux des copolymères et/ou des terpolymères mentionnés ci-après ou plus :

un copolymère

d'éthylène et de propylène ou
d'éthylène et de butylène ou
de propylène et de butylène ou
d'éthylène et d'une autre $\alpha$-oléfine contenant de 5 à 10 atomes de carbone ou
de propylène et d'une autre $\alpha$-oléfine contenant de 5 à 10 atomes de carbone ou

un terpolymère

d'éthylène et de propylène et de butylène ou
d'éthylène et de propylène et d'une autre $\alpha$-oléfine contenant de 5 à 10 atomes de carbone, et

un polydiorganosiloxane à viscosité élevée et du dioxyde de silicium, et
le cas échéant, d'autres additifs ajoutés, et

c) la couche de recouvrement C contient

un copolymère

d'éthylène et de propylène ou
d'éthylène et de butylène ou
de propylène et de butylène ou
d'éthylène et d'une autre $\alpha$-oléfine contenant de 5 à 10 atomes de carbone ou
de propylène et d'une autre $\alpha$-oléfine contenant de 5 à 10 atomes de carbone ou

un terpolymère

d'éthylène et de propylène et de butylène ou

d'éthylène et de propylène et d'une autre $\alpha$-oléfine contenant de 5 à 10 atomes de carbone et

le cas échéant, des additifs ajoutés dans des quantités respectivement efficaces,
et présente sur sa surface externe une enduction non cohérente avec du polydialkylsiloxane.

2. Feuille multicouche de polyoléfine selon la revendication 1, caractérisée en ce que le polydiorganosiloxane à viscosité élevée présente une viscosité supérieure à 50.000 mm$^2$/s et le dioxyde de silicium présente un diamètre moyen de particule de 2 à 6 $\mu$m.

3. Feuille multicouche de polyoléfine selon l'une quelconque des revendications 1 et/ou 2, caractérisée en ce que le mélange polymère de la couche de recouvrement A est constitué par deux des copolymères et/ou des terpolymères ci-après ou plus:

   des copolymères statistiques d'éthylène et de propylène possédant

   une teneur en éthylène de 2 à 10 % en poids, de préférence de 3 à 6 % en poids, ou

   des copolymères statistiques de propylène et de butylène-1 possédant

   une teneur en butylène de 4 à 25 % en poids, de préférence de 10 à 20 % en poids,

   chaque fois rapportés au poids total du copolymère, ou
   des terpolymères statistiques d'éthylène, de propylène et de butylène-1 possédant

   une teneur en éthylène de 1 à 10 % en poids, de préférence, de 2 à 6 % en poids, et
   une teneur en butylène-1 de 3 à 20 % en poids, de préférence de 8 à 10 % en poids,

   chaque fois rapportés au poids total du terpolymère.

4. Feuille multicouche de polyoléfine selon une ou plusieurs des revendications 1 à 3, caractérisée en ce que le mélange polymère de la couche de recouvrement A est constitué par un mélange d'un terpolymère d'éthylène, de propylène et de butylène-1 et d'un copolymère de propylène et de butylène-1 possédant

   une teneur en éthylène de 0,1 à 7 % en poids,
   une teneur en propylène de 50 à 90 % en poids, et
   une teneur en butylène-1 de 10 à 40 % en poids,
   rapportés au poids total du mélange polymère.

5. Feuille multicouche de polyoléfine selon une ou plusieurs des revendications 1 à 4, caractérisée en ce que la couche de recouvrement C contient, à titre d'additif supplémentaire, du dioxyde de silicium possédant un diamètre moyen de particule de 2 à 6 $\mu$m et l'enduction relative de la surface est inférieure à 20.

6. Feuille multicouche de polyoléfine selon une ou plusieurs des revendications 1 à 5, caractérisée en ce que la couche de recouvrement C contient

   un copolymère statistique d'éthylène et de propylène possédant

   une teneur en éthylène de 2 à 8 % en poids, de préférence de 3 à 6 % en poids, ou

   un copolymère statistique de propylène et de butylène-1 possédant

   une teneur en butylène de 4 à 25 % en poids, de préférence de 10 à 20 % en poids,

   chaque fois rapportés au poids total du copolymère, ou
   un terpolymère statistique d'éthylène, de propylène et de butylène-1 possédant

   une teneur en éthylène de 1 à 10 % en poids, de préférence de 2 à 6 % en poids, et

une teneur en butylène-1 de 3 à 15 % en poids, de préférence de 8 à 10 % en poids,

rapportés au poids total du terpolymère.

7. Feuille multicouche de polyoléfine selon une ou plusieurs des revendications 1 à 6, caractérisée en ce que l'indice de fluidité à chaud (norme DIN 53 735) du mélange polymère de la couche de recouvrement A se situe entre 1 g/10 min, et 16 g/10 min.

8. Feuille multicouche de polyoléfine selon une ou plusieurs des revendications 1 à 7, caractérisée en ce que l'indice de fluidité à chaud (norme DIN 53 735) du polymère de propylène de la couche de base B après la décomposition à l'aide d'un peroxyde se situe entre 2 g/10 min, et 5,5 g/10 min.

9. Feuille multicouche de polyoléfine selon une ou plusieurs des revendications 1 à 8, caractérisée en ce que l'indice de fluidité à chaud (norme DIN 53 735) du copolymère ou du terpolymère de la couche de recouvrement C est inférieur à 3,0 g/10 min.

10. Feuille multicouche de polyoléfine selon une ou plusieurs des revendications 1 à 9, caractérisée en ce que le copolymère ou le terpolymère de la couche de recouvrement C a été soumis à une décomposition à l'aide d'un peroxyde, l'indice de fluidité à chaud après la décomposition ayant subi une augmentation dans le domaine de 5,5 à 15 g/10 min.

11. Feuille multicouche de polyoléfine selon une ou plusieurs des revendications 1 à 10, caractérisée en ce que l'épaisseur de la ou des couches de recouvrement, le cas échéant, indépendamment l'une de l'autre, se situe entre 0,6 et 3,0 μm.

12. Feuille multicouche de polyoléfine selon une ou plusieurs des revendications 1 à 11, caractérisée en ce que l'épaisseur totale de la feuille multicouche se situe entre 6 et 70 μm.

13. Feuille multicouche de polyoléfine selon une ou plusieurs des revendications 1 à 12, caractérisée en ce que la couche de base et/ou la ou les couches de recouvrement contiennent, à titre d'additifs supplémentaires, des agents antistatiques et/ou des agents s'opposant à l'adhérence entre feuilles par contact et/ou des agents de glissement et/ou des stabilisateurs et/ou des agents de neutralisation.

14. Procédé pour préparer la feuille multicouche de polyoléfine selon la revendication 1, dans lequel on soumet à une coextrusion les masses fondues correspondant aux feuilles individuelles à travers une filière pour feuilles, on tend et on refroidit la feuille ainsi obtenue à des fins de durcissement par-dessus un rouleau tendeur dont la température se situe entre 30 et 50°C, on soumet la feuille à un étirage biaxe avec un rapport d'étirage dans la direction longitudinale de 4:1 à 7:1 et avec un rapport d'étirage dans la direction transversale de 8:1 à 10:1, et on soumet la feuille ayant subi un étirage biaxe à un thermofixage, caractérisé en ce qu'on soumet la couche de recouvrement C à un traitement par effluves négatives, puis, par mise en contact des deux couches de recouvrement A et C, on enduit la couche de recouvrement C avec une couche non cohérente de polydialkylsiloxane.

15. Procédé selon la revendication 14, caractérisé en ce qu'on ajoute les additifs respectifs à l'aide d'un mélange mère.

16. Procédé selon les revendications 14 et/ou 15, caractérisé en ce que la concentration des additifs dans le mélange mère se situe entre 6 et 18 % en poids, rapportés au poids du mélange total.

17. Utilisation de la feuille de polyoléfine selon une ou plusieurs des revendications 1 à 13 à titre de feuille d'emballage.

18. Utilisation de la feuille de polyoléfine selon une ou plusieurs des revendications 1 à 13 pour la fabrication de feuilles imprimées de polyoléfine.

19. Utilisation de la feuille de polyoléfine selon une ou plusieurs des revendications 1 à 13 pour la fabrication de stratifiés.

20. Utilisation de la feuille de polyoléfine selon la revendication 19 pour la fabrication de stratifiés avec du papier, du carton, des métaux, des feuilles métallisées en matières synthétiques et des feuilles en matières synthétiques.

**21.** Feuille de polyoléfine selon une ou plusieurs des revendications 1 à 13, caractérisée en ce qu'une surface, le cas échéant les deux surfaces ont été munies d'une impression.

**22.** Stratifiés contenant une feuille de polyoléfine selon une ou plusieurs des revendications 1 à 13.

**23.** Emballages contenant une feuille de polyoléfine selon une ou plusieurs des revendications 1 à 13.